Europäisches Patentamt

(19) European Patent Office

Office européen des brevets

(11) **EP 1 329 714 A1**

(12) **EUROPEAN PATENT APPLICATION**
published in accordance with Art. 158(3) EPC

(43) Date of publication:
**23.07.2003 Bulletin 2003/30**

(21) Application number: **01970200.0**

(22) Date of filing: **25.09.2001**

(51) Int Cl.⁷: **G01N 30/48**

(86) International application number:
**PCT/JP01/08300**

(87) International publication number:
**WO 02/025268 (28.03.2002 Gazette 2002/12)**

(84) Designated Contracting States:
**AT BE CH CY DE DK ES FI FR GB GR IE IT LI LU MC NL PT SE TR**

(30) Priority: **25.09.2000 JP 2000291305**
**27.04.2001 JP 2001132336**
**02.05.2001 JP 2001135320**

(71) Applicant: **GI Sciences Incorporated**
**Tokyo 163-1130 (JP)**

(72) Inventors:
• **FURUNO, Masahiro**
**Iruma-shi, Saitama 358-0032 (JP)**

• **OHIRA, Masayoshi**
**Iruma-shi, Saitama 358-0032 (JP)**
• **FURUSHIMA, Noritaka**
**Iruma-shi, Saitama 358-0032 (JP)**
• **HAMADA, Takayuki**
**Iruma-shi, Saitama 358-0032 (JP)**
• **HIRAMATSU, Yuka**
**Iruma-shi, Saitama 358-0032 (JP)**
• **SHINTANI, Yukihiro**
**Iruma-shi, Saitama 358-0032 (JP)**

(74) Representative: **Staeger - Sperling**
**Müllerstrasse 3**
**80469 München (DE)**

(54) **METHOD AND DEVICE FOR COLLECTING AND CONCENTRATING SPECIMEN**

(57) For the purpose of extremely simply carrying out a pre-treatment such as sample preparation including extraction or concentration of a component of interest in a short time when performing a chromatographic analysis, it is intended that a column configured such that the inside of a narrow tube is provided with a porous body having open pore structures across the entire diameter of the tube and along an appropriate length of the tube is used and a sample containing a substance to be measured is allowed to pass through the column to retain and concentrate the substance to be measured within pores of the porous body in the column, and it is also intended to provide a method in which the above described process is conducted as a micro trap when carrying out the pre-treatment of the chromatographic analysis and then the removed substances are introduced into analytical means, a method in which a sample is introduced into a separation column after narrowing the sample band when introducing the sample into a liquid chromatograph, and a method for collecting atmospheric substances such as gaseous substances in the atmosphere within a tube by using a collection tube configured such that a porous body having open pore structures composed of inorganic, organic, or hybrid polymers is formed inside a portion or all of a blank tube, the tube having advantages that the tube can be inexpensively manufactured so as to have an extremely simple structure as the so-called passive sampler which does not use a power such as a motor, a multiplicity of the columns are simultaneously used to increase the number of measurements, the sample can be collected without variation, and resistance at the adsorbent is reduced because an air blowing pressure loss is low and a surface area is large as a collector.

FIGURE 1

**Description**

Technical Field

The present invention relates to a method and device for concentrating and introducing a sample, and more particularly to a method and device for concentrating and introducing a sample whose band are narrowed by a porous body having open pore structures.

Background Art

In a chromatographic analysis, it has been said that the time and effort required for the so-called pre-treatment including sampling, extraction of analyte, and sample preparation such as concentration represents 80% of the analytical work. Solid-Phase-Micro extraction (SPME) developed by Pawliszyn in 1990 is a method for pre-treating a sample, where such works and introduction into the chromatograph can be simply performed. In the SPME method, a fiber whose surface is coated with a liquid phase is exposed to a head space or a solution of the sample in order to perform extraction, and analyte extracted into the liquid phase on the fiber is thermally removed at a GC injection port and is introduced to the GC (Japanese Patent Laid-Open No. 5-506715).

In addition, an In-tube SPME method in which a capillary column of GC is used for an adsorption mechanism (Hiroyuki Katayama, Shizuo Narimatsu, Heather L Lord, J. Pawliszyn Chromatography 20 (1999) 237-249) has been used recently. In this method, a sample is made to flow into the capillary column and a liquid phase in the column is allowed to retain analyte, then the solvent is made to flow therethrough for desorbing analyte by the use of the solvent. On the other hand, another method has been suggested in which a syringe is used and analyte is retained by a hollow needle having a stationary phase being fixed on an inner surface thereof, then analyte is removed by making a solvent flow through the needle or by heating the needle (Japanese Patent Laid-Open No. 8-94597). Conventionally, when analyte is concentrated, a column whose cylindrical body is packed with a bead-like inorganic packings has been generally used.

In the former technique, a sample retention capacity is generally increased by making a film thickness of the fiber liquid layer larger, in order to increase a sample load. However, there is a problem that the time required for equilibrating analyte with the liquid phase becomes longer as the film thickness is increased. As for extraction of an agricultural chemical dissolved in water which is performed by actually using a liquid phase having a thickness of 100 μm, it has been frequently reported that the time required for reaching an equilibrium was 15 to 60 minutes or more (J. Beltram, F. J. L pez. F. Hern ndez Journal of Chromatography A. 885 (2000) 389-404). Although the equilibration time has been reduced by stirring the sample and by shaking the syringe or heating the sample for example in order to reduce the equilibration time, substantial reduction in the equilibration time has not been achieved (Makoto Okawa, Takashi Kasamatsu, Yoshiya Akiba, the 8th Symposium on Environmental Chemistry, Kyushu, 1999). In addition, this method can not be applied to an analysis of a thermally decomposable component because the sample is thermally removed when the sample is introduced into the analytical system. When the thermal desorption in the SPME is performed at a injection port of an existing gas chromatograph, a peak width is finally broadened because a low boiling component largely diffuses at a time of its injection.

In the In-tube SPME method using a capillary column as well as in the In-tube SPME method using a syringe, a stationary phase is provided on an inner surface of the follow needle and a center thereof is hollow. The sample freely passes through the hollow portion, thus, opportunities that analyte diffuses into the stationary phase are reduced, and the time required for reaching an equilibrium becomes longer. When a dilute component is analyzed in accordance with the SPME method, analyte is required to be substantially concentrated by subjecting analyte to the extraction in large quantity, and there is a limit to coating of the liquid phase on a surface of the fiber. Therefore, this analysis may be difficult depending on the concentrations of analyte. In addition, it becomes necessary to increase an inner diameter of the needle and to increase the film thickness, in order to increase a sample load. However, as the inner diameter increases, a contact efficiency is reduced due to an extended diffusion time. On the other hand, in a method which uses a column being packed with a filler, there are some problems as follows: (1) a flow rate depends on the packing state, so that the values of analytical result will vary; and (2) resistance to a stream of the fluid becomes larger and the flow rate per unit time is decreased, so that the analytical time becomes longer. In this method, thermal desorption is also carries out at an existing GC injection port, so that broadening of a peak width can not be avoided.

On the other hand, a thermal desorption method which is for introducing a sample into an analytical system is practiced as follows. That is, when a gas sample is concentrated, a collection tube into which a collector as typified by Tenax is packed is used and the gas sample is allowed to pass therethrough to concentrate the measuring object. Subsequently, the concentrated measuring object is thermally removed and then introduced into the analytical system. This method when being applied to a low boiling compound requires a cooling medium such as liquid nitrogen because the collection column tube is required to be cooled by a cryofocus device in collecting. Therefore, it is inevitable that the device becomes larger.

In view of the above describes problems, the present invention is intended to provide a method and device in which: a distribution resistance is reduced relative to that obtained by a column packed with particulate substances; a sample load is increased relative to that obtained by the conventional capillary column; a time required for reaching a distribution equilibrium of analyte can be reduced compared with that obtained by the conventional SPME fiber or In-tube SPME method; and a sample can be introduced with a band thereof being kept narrow while preventing the sample band from broadening which has been conventionally caused by the use of an existing injection port at a time of introducing the sample into the analytical column even if the same dimension as that of the analytical column is maintained by solid-phase extraction.

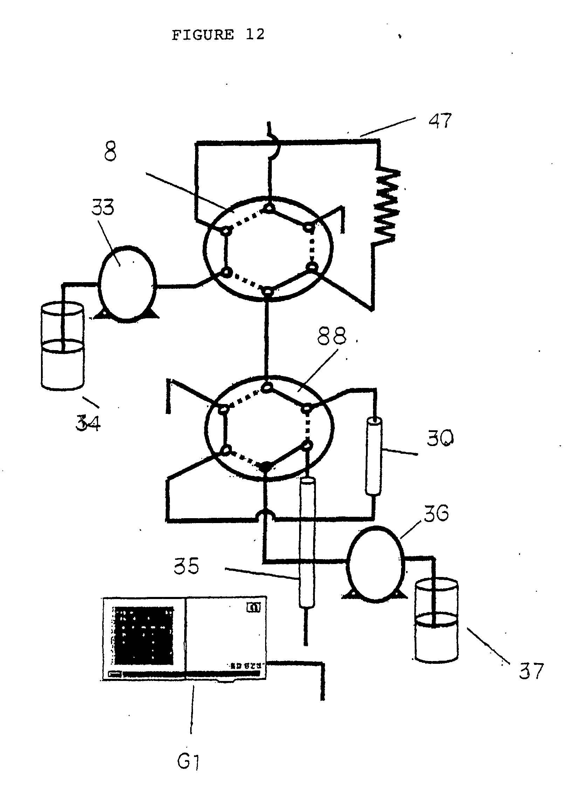

For introducing a sample when performing liquid chromatography, a concentration channel using a pre-column 30 as shown in Figure 12 has been constructed in the past. The pre-column 30 for concentration used in this case, whose filler may have retention behavior different from that used in a separation column 35, is required to elute analyte in a narrow band at a time of eluting thereof and to be introduced into the separation column 35. Performance of the pre-column 30 is also required to be equal to or better than that of the separation column 35. Performance of a packed column is inversely proportional to a particle size of the packings to be used. Consequently, a pressure within the column increases, so that valves and liquid delivering pumps as shown in Figure 12 are required.

In addition, reference numerals 8, 88, 33, 47, and 61 denote an injection valve, a switching valve, a pump, a loop, and a detector, respectively, and each of reference numerals 34 and 37 denotes an eluent.

In the above described In-Tube SPME method, it is required to use a column having a large inner diameter in which resistance is reduced, in order to increase an amount of the sample to be used. However, the column is a open tubular, so that diffusion efficiency decreases (contact efficiency of solute with a liquid phase decreases) as the inner diameter increases, and consequently, concentration performance also decreases. Thus, a narrow capillary is used. Although a contact surface becomes larger by using such a narrow capillary, an amount of the liquid phase immobilized on a surface of the capillary tube decreases, and consequently, an amount of the sample which can be concentrated is limited. It is a matter of course that this amount of sample is largely affected by a matrix except analyte. Consequently, the scope of analyzable objects is limited.

A sample band at a time of introducing the sample largely affects the final result of the separation analysis. That is, the sample band becomes broader as the amount of injection increases, and consequently, the resolution decreases.

A width ($4\sigma$) of the peak eluted from the liquid chromatograph results from totaling the broadening of bands at the column, at the injection port, at the detector, and at the piping for example, so that the width ($4\sigma$) is represented by as follows: $\sigma^2$ (a total) = $\sigma^2$ (at the injection port)+ $\sigma^2$ (at the column) + $\sigma^2$ (at the detector) + $\sigma^2$ (at the piping) (a reference: J. P. C. Vissers, Recent developments in microcolumn liquid chromatography, J. Chromatgr. A856, 117-143 (1999)). An effect of each broadening, other than that obtained at the column, should be 1/10 to 1/20 of an effect at the column in order to make full use of the performance of the column to efficiently separate the components. Therefore, it becomes possible to utilize the column sufficiently as the amount of injection decreases, but it is desirable to inject a large amount of sample for improving an analytical sensitivity when performing a microanalysis.

The sample injection volume is represented by the following equation (Formula 1):

(Formula 1)

$$V^2_{INJ} = K^2\sigma^2_{INJ} = \theta^2(K\pi r^2\varepsilon_t)^2 HL$$

where $V_{INJ}$ is a sample injection volume;

K is a retention factor;
r is a column radius;
$\varepsilon_t$ is a total porosity;
H is a theoretical plate height of the column;
L is a length of the column; and
$\theta^2$ is a loss (%) in column efficiency.

According to the above described equation, provided that a loss in the column efficiency is 5%, the maximum injection amount becomes 400 nl when using a column having an inner diameter of 1 mm, a length of 15 cm, and a particle size dp = 3 $\mu$m. When performing analysis on drugs in organisms or harmful substances in the environment, it is desirable to inject an increased amount of sample as much as possible because such sample contains an extremely low level of solute.

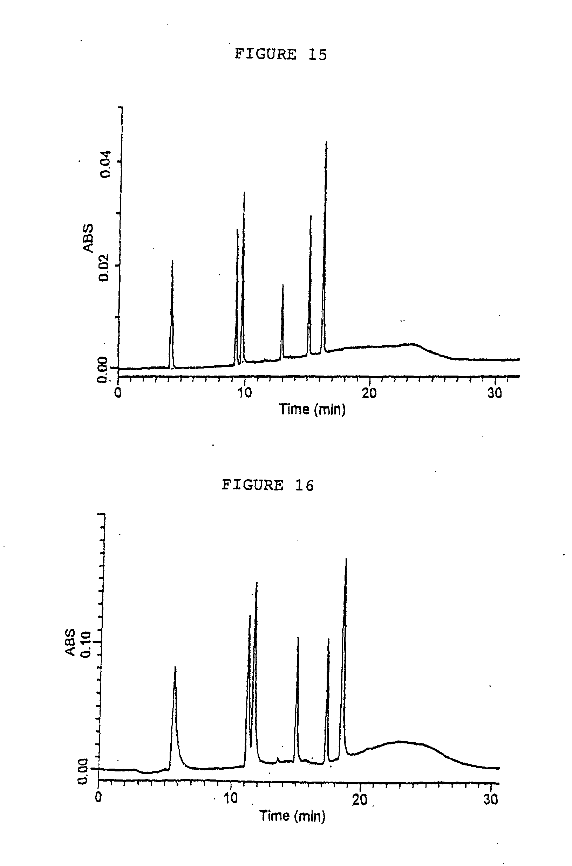

Once a 0.1 µL of agricultural standard sample (dissolved with an eluent) is injected into this conventional HPLC system for performing a gradient analysis, sharp peaks can be obtained (Figure 15).

(Table 1)

| Analytical Conditions: | |
| --- | --- |
| Pump | MP680Micro-Flow Pump |
| Flow Rate | 4 µl/min |
| Eluent A | $20mMKH_2PO_4$/ACN = 90/10 |
| Eluent B | ACN = 100 |
| Gradient | A/B=50/50 (5 min.) $\rightarrow$ 15 min. $\rightarrow$ 20/80 (5 min.) $\rightarrow$ 3 min. $\rightarrow$ 50/50 (5 min.) |
| Column | Inertsil ODS-3 (3 mm) 0.3 mm i.d. $\times$ 150 mm |
| Detector | UV 230 nm |
| Sample | 1. Asulam, 2. MCPP, 3. Thiuram, |
| | 4. Iprodione, 5. Bensulide, |
| | 6. Pencycuron |

The analytical conditions described above are the same through all experiments and examples described below, except for a method of injection. In addition, a peak name of each chromatogram is as follows.

Sample Concentration

Asulam 500 (ppm) (a peak which appears at the beginning of the chromatogram)

| Thiuram 100 | Peak 1 |
| --- | --- |
| MCPP 40 | Peak 2 |
| Iprodione 50 | Peak 3 |
| Pencycuron 90 | Peak 4 |
| Bensulide 100 | Peak 5 |

Next, a 1 µL of sample is injected thereto in a similar manner for obtaining a sensitivity which is increased by a factor of 10. A volume injected into the loop under the load condition becomes 1 µL. The sample is introduced into the column at a flow rate of 4 µL/min. at a time of injecting thereof, so that it will take 15 seconds for obtaining a peak, whose band width becomes broader. As can be seen from the chromatogram, Peak 1 (Thiuram) and Peak 2 (MCPP) have tailings so that these peaks are not completely separated. With respect to other peaks eluted lately, it has been shown that the sample is concentrated, and consequently tailing as described above is substantially eliminated. However, such elimination is not achieved completely. As described above, even the analysis based on the gradient elution which may be expected to effect concentration at the main column inlet has limitations, so that it is impossible to inject a large amount of sample.

For collecting gaseous components in the air, an active sampling method has been predominantly employed, in which the air is sucked by a pump for example at a constant flow rate and then analyte is collected by activated carbon for example. In addition, it is also possible to introduce an air sample into a reagent by an impinger and then to allow the sample to be adsorbed to the reagent through a chemical reaction. Analyte, after being collected, is thermally removed or extracted in an organic solvent to be subjected to a quantitative determination. In this case, a sampling amount of the sample can be obtained from a suction flow rate of the pump.

On the contrary, a passive sampler which is a small and simplified measuring device without a power source has been suggested recently. In the passive sampler in which a gas flow controlling mechanism is not provided at the measuring device side, substances to be adsorbed are passively adsorbed to an adsorbent by bring analyte into contact with an adsorbent only by a diffusion flow of the gas molecules.

The so-called active sampling method, in which the atmospheric air is sucked by a power source such as a pump in any case, costs more when the number of measurements of sampling points which is the most important for measuring the atmospheric substances becomes larger. Therefore, it is difficult to minimize the variations the number of measurement because the number of sampling points measurements are restricted. Further, if a packings such as an activator is used as the collector, an air blowing pressure loss increases and resistance at an adsorption member also increases. In addition, if analyte is subjected to the solvent desorption after collecting thereof, a large amount, for example 2 to 20 mL, of solvent is required. Actually when performing a quantitative analysis, only a 1 to 20 $\mu$L of solvent is introduced into the chromatograph for example, so that a substantial amount of solvent will be wasted. Therefore, it becomes impossible to measure a component having a low sensitivity.

On the other hand, a relation between a collection time and a collection amount at a time of passive sampling can be represented as follows:

$$H = D \times (A/L) \times (Ca\text{-}Cs) = K_{OG} \times A \times (Ca\text{-}Cs)$$

where H is a flux of interest (G); M is a collection amount of a substance of interest (G); A is a diffusion cross sectional area ($cm^2$); L is a diffusion length (cm); D is a diffusion coefficient ($cm^2/s$); $K_{OG}$ is the over all mass transfer coefficient (cm/s); Ca is a boundary concentration at an outside of a tube ($g/cm^2$); and Cs is a boundary concentration at an adsorption phase side ($g/cm^2$).

A collection amount (g) after the sampling for t seconds, provided that a component to be analyzed which has reached the adsorption phase is completely collected by the adsorbent (Cs=0), is as follows:

$$M = D \times (A/L) \times Ca) \times t = K_{OG} \times A \times Ca \times t.$$

A dimension of $K_{OG} \times A$ in the above equation is $cm^3/s$ and corresponds to a pump flow rate at a time of active sampling. That is, in the passive sampler, it is essential to make a value of $K_{OG}$ constant during the sampling in order to perform the measurement with a high degree of precision.

In a static circumstance where the atmosphere is stable, the value of $K_{OG}$ becomes constant because this value is determined based on a component in the atmosphere and a collection tube. However, in an actual measurement circumstance where an atmospheric air flow is continuously changing, the value of $K_{OG}$ also varies during the measurement due to the change of the atmospheric air flow which may brings about changes in a boundary layer resistance. The variation of $K_{OG}$ during the measurement causes variations of the measurement value.

The above described SPME (Solid-Phase Micro Extraction) does not employ plastic materials which has been often used in the conventional passive samplers, so that there is no need to worry about the elution of components which inhibit the extraction. In this SPME, the diffusion length can be changed more freely compared with the conventional badge sampler. However, when a film thickness of the adsorbent is increased in order to increase the sample load, it takes a long time for analyte to diffuse and penetrate into the inside of the absorbent from a surface thereof, so that the contact efficiency is reduced. Also, the efficiency of desorbing analyte is significantly reduced for the same reasons as described above.

Disclosure of the Invention

A first aspect of the present invention is a method for collecting and concentrating a sample characterized in that a column configured such that the inside of a narrow tube is provided with a porous body having open pore structures across the entire diameter of the tube and along an appropriate length of the tube is used, a sample containing a substance to be measured is allowed to pass through the column to retain the substance to be measured within pores of the porous body in the column, and the substance to be measured is concentrated to narrow a sample band.

A second aspect of the present invention is a method for collecting and concentrating a sample characterized in that, as a pre-treatment for a chromatographic analysis, a column configured such that the inside of a narrow tube is provided with a porous body having open pore structures across the entire diameter of the tube and along an appropriate length of the tube is used as a micro trap, a sample containing a substance to be measured is allowed to pass through the column to retain the substance to be measured within pores of the porous body in the column, and the substance to be measured is concentrated and then removed from the porous body to be introduced into analytical means.

In a third aspect of the present invention, the method for collecting and concentrating a sample described in the first or second aspect is characterized in that the porous body is a single pore.

In a fourth aspect of the present invention, the method for collecting and concentrating a sample described in the first or second aspect is characterized in that the porous body which is formed by filling a macropore with a micropore is used.

A fifth aspect of the present invention is a device for collecting and concentrating a sample characterized in that a column configured such that the inside of a narrow tube is provided with a porous body having open pore structures across the entire diameter of the tube and along an appropriate length of the tube is used as a micro trap, the column being equipped with a rapid heating device and one end of the column being communicating with sample injection means and the other end of the column being communicating with analytical means.

Further, the present invention is intended to suggest a method and device for introducing a sample, in which a large amount of sample is introduced, and the sample having a narrow band can be eluted at a time of elution thereof and the eluted sample can be introduced into a separation column, and it also becomes possible to concentrate the sample at a high speed, so that the sample can be introduced without any alterations thereof even when the sample is concentrated. Therefore, a sixth aspect of the present invention is a method for introducing a sample for use in liquid chromatography characterized in that, before introducing the sample into a separation column of the liquid chromatography, the sample is retained and concentrated within an integral solid-phase extraction column (Monolithic Column) having multiple continuous pores or being a porous body communicating with a sample introducing valve and then the sample is introduced into the separation column after obtaining a narrow sample band.

A seventh aspect of the present invention is a device for introducing a sample for use in liquid chromatography characterized in that a channel for introducing the sample into a separation column of the liquid chromatography is communicating with an integral solid-phase extraction column having multiple continuous pores or being a porous body communicating with a sample introducing valve.

In an eighth aspect of the present invention, the device for introducing a sample for use in liquid chromatography described in the seventh aspect is characterized in that the solid-phase extraction column is directly connected to an injection part.

Further, the present invention provides a method and device for ideally adsorbing a sample, in which the device can be inexpensively manufactured so as to have an extremely simple structure as the so-called passive sampler which does not use a power source such as a motor, a multiplicity of the columns are simultaneously used to increase the number of measurements, the sample can be collected without variation, and resistance at the adsorbent is reduced because an air blowing pressure loss is low and a surface area is large as a collector. Therefore, a ninth aspect of the present invention is a method for collecting atmospheric substances such as gaseous substances in an atmosphere within a tube, the method for simply collecting the atmospheric substances being characterized in that a collection tube configured such that a porous body having open pore structures composed of inorganic, organic, or hybrid polymer is formed within a blank tube is used.

A tenth aspect of the present invention is a device for simply collecting atmospheric substances characterized in that, a porous body having open pore structures composed of inorganic, organic, or hybrid polymers is formed within a certain portion of a blank tube as a collection tube, the certain portion being spaced apart by an appropriate distance from an end of the blank tube.

In an eleventh aspect of the present invention, the device for simply collecting atmospheric substances described in the tenth aspect is characterized in that a porous body having open pore structures composed of substances which do not adsorb components to be measured is provided for a space between the above described end of the blank tube and the above described certain portion.

A twelfth aspect of the present invention is an analytical method, characterized in that gaseous components are collected by using a method for simply collecting atmospheric substances described in the ninth aspect of the present invention, and then the collected components are introduced into an analytical instrument such as a chromatograph via appropriate extraction means such as solvent extraction means or thermal extraction means.

Brief Description of the Drawings

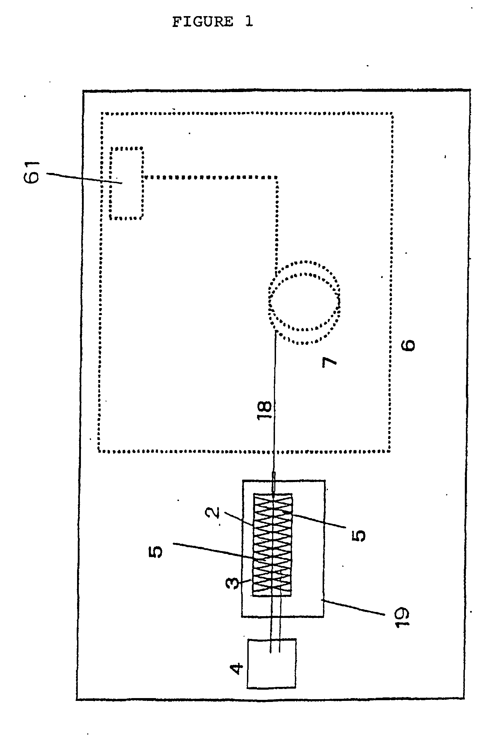

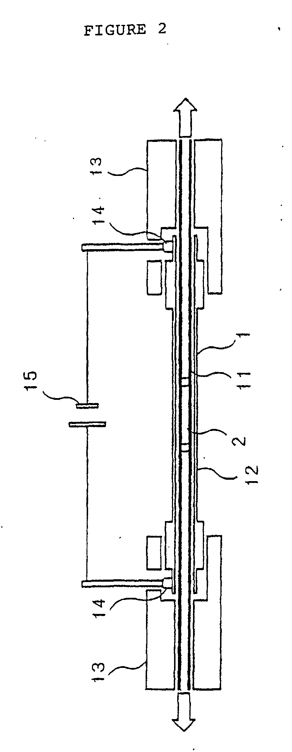

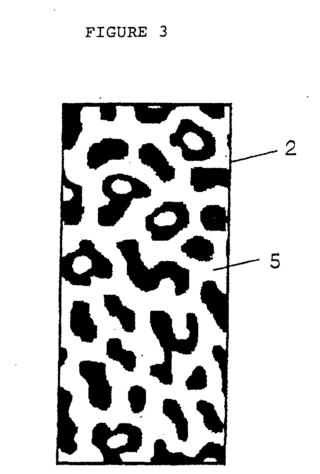

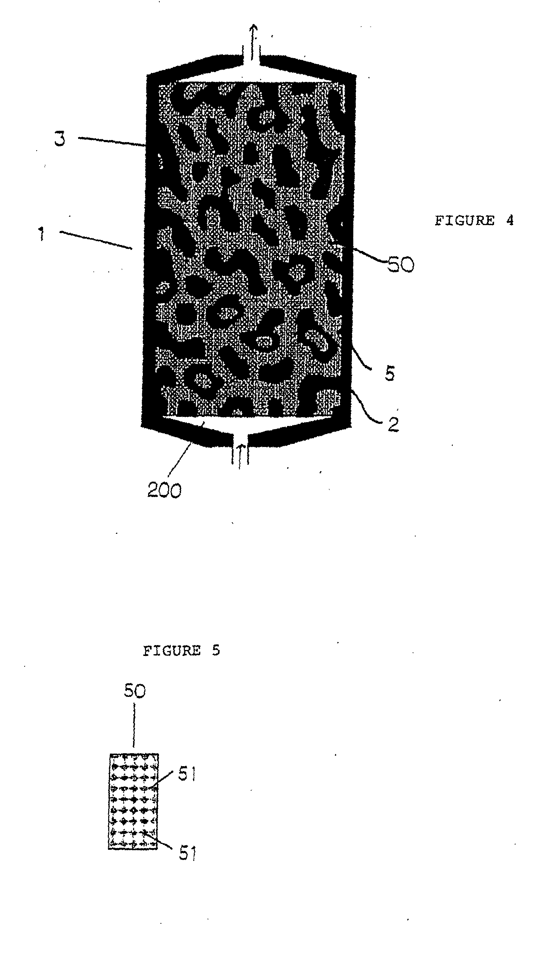

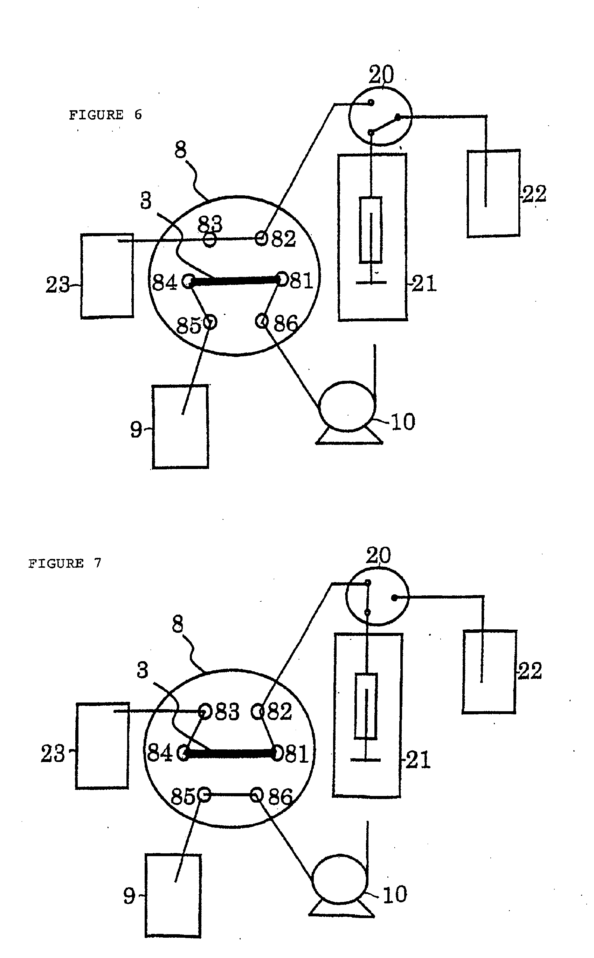

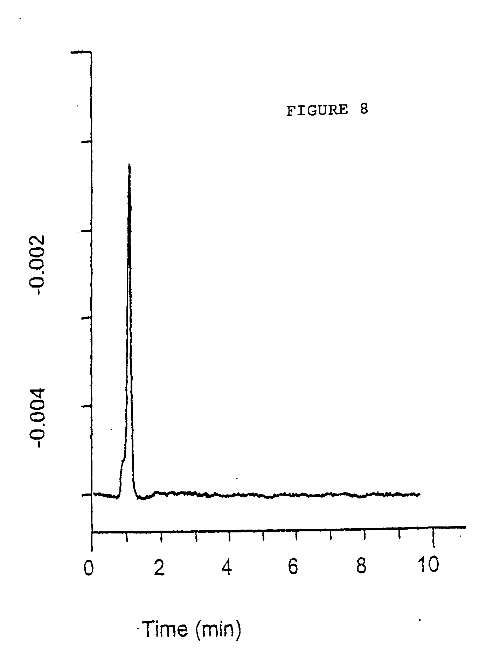

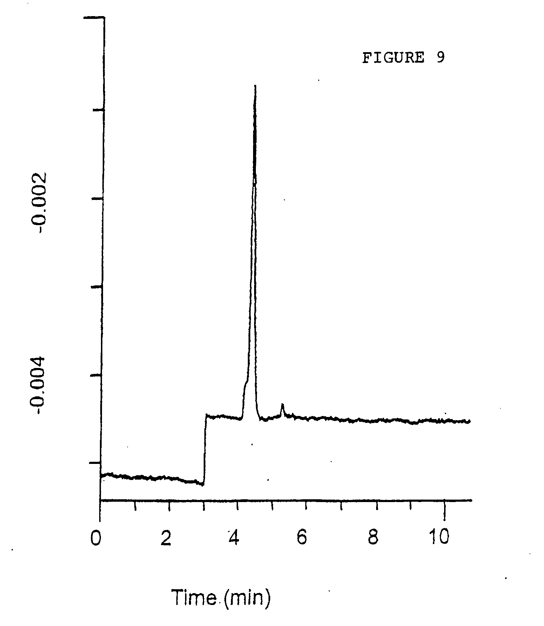

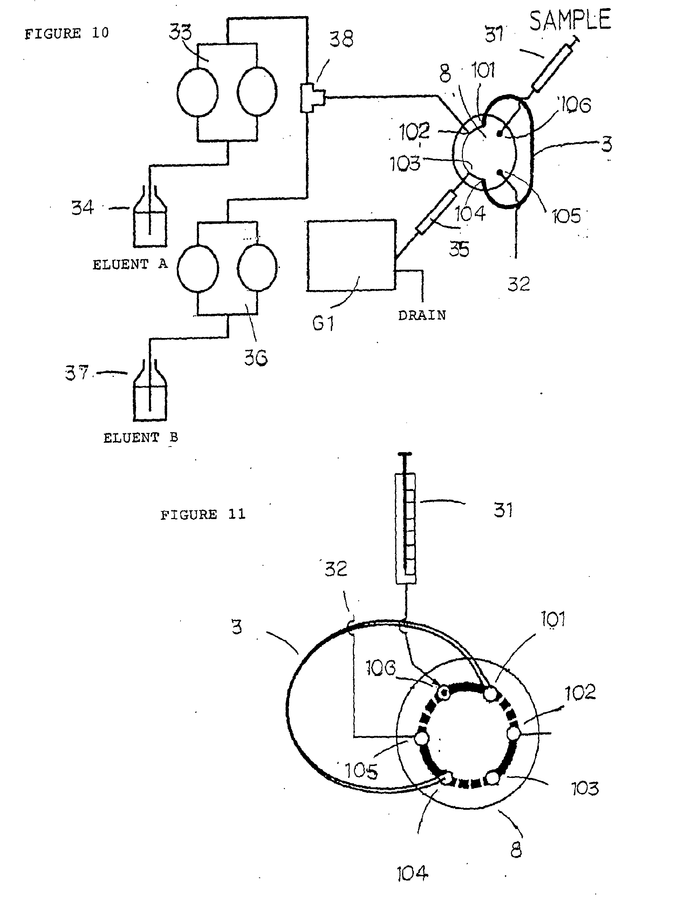

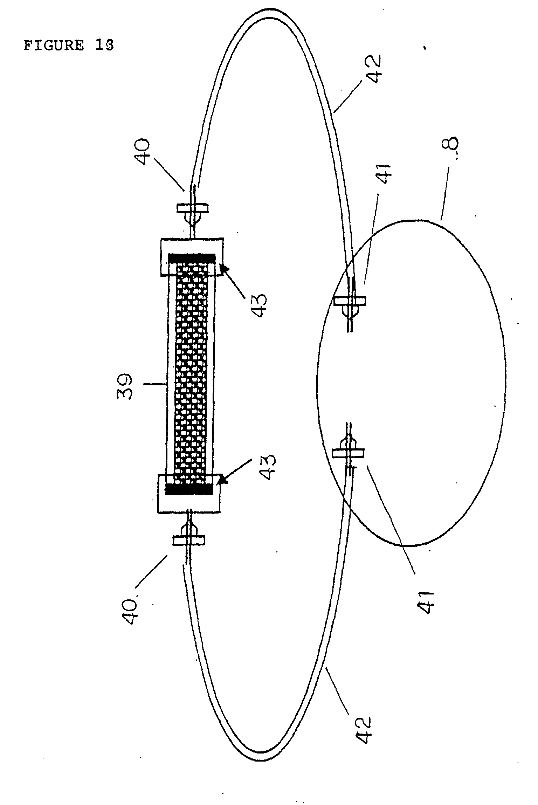

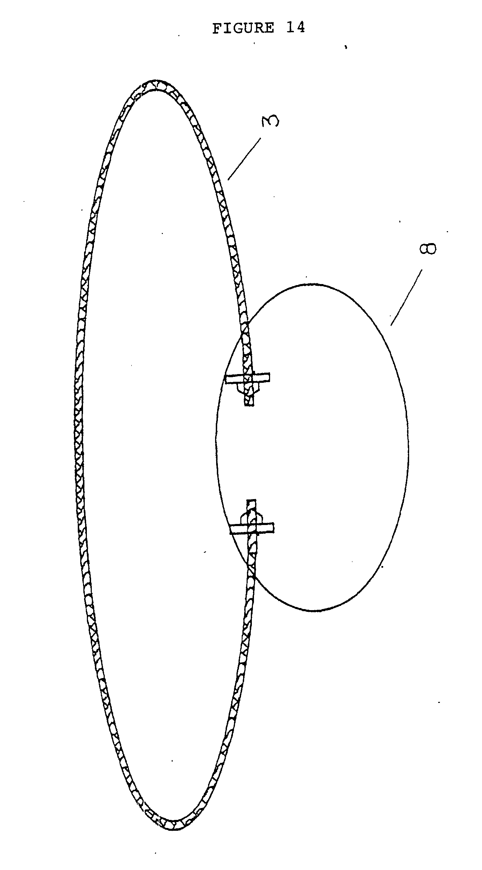

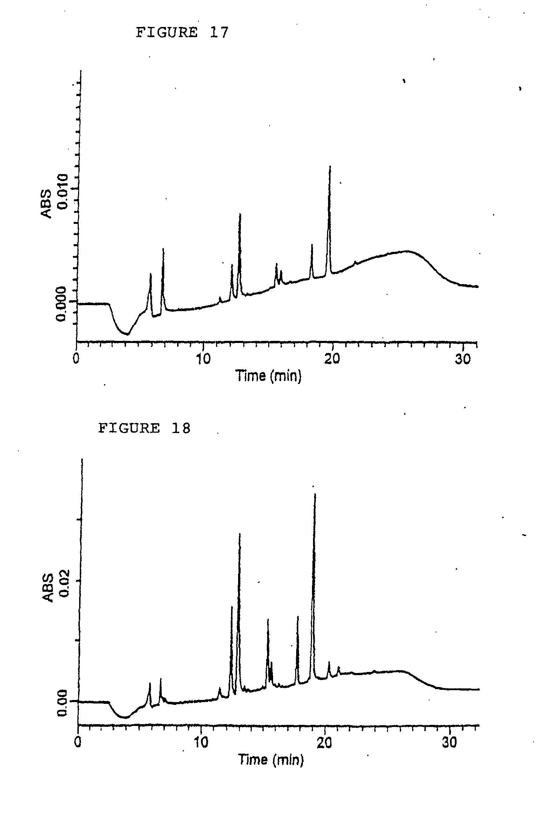

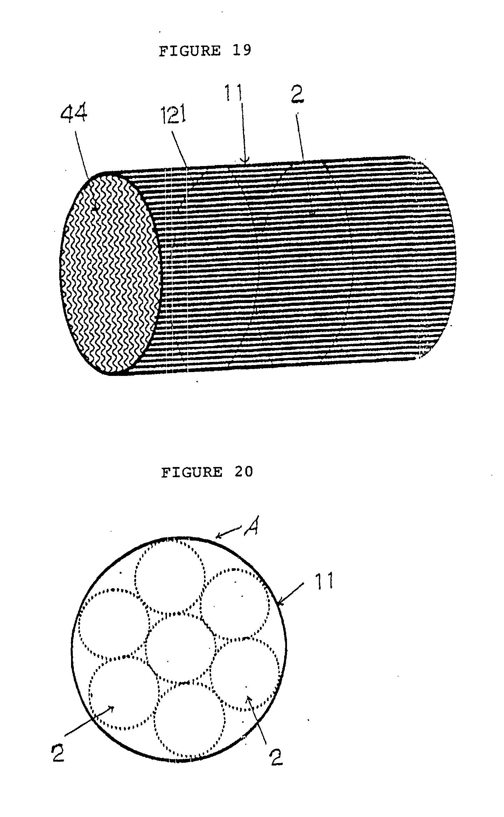

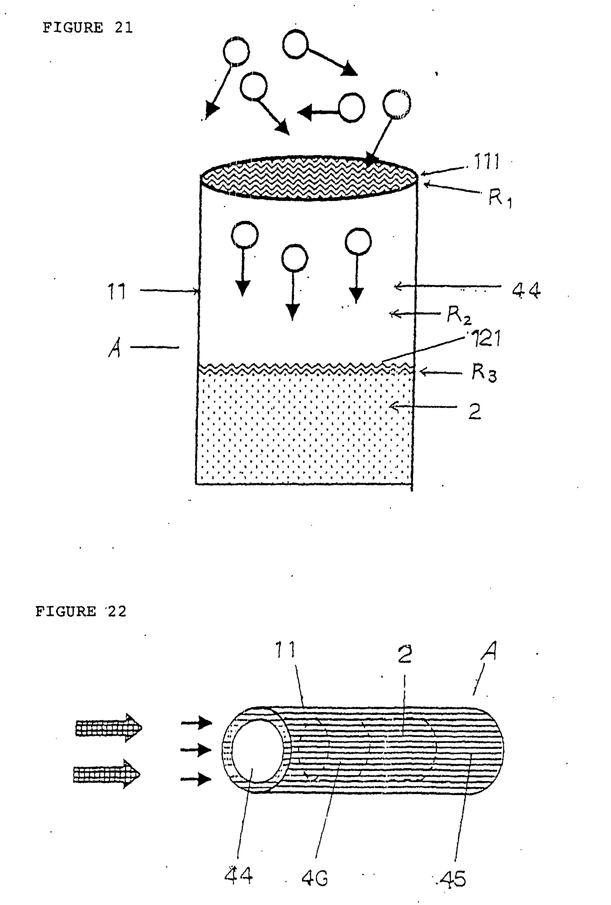

Figure 1 is a schematic view illustrating an example of the present invention; Figure 2 is an illustration of a substantial part of the above described example; Figure 3 is an illustration of a porous body of a micro trap of a substantial part according to the present invention; Figure 4 is an illustration of another porous body of the above described micro trap; Figure 5 is an enlarged illustration of a portion of the above described porous body; Figure 6 is an illustration of a substantial part of another example according to the present invention; Figure 7 is an operation diagram of the above described example; Figure 8 is a chromatogram obtained when a trap is not used; Figure 9 is a chromatogram obtained by an example of the present invention; Figure 10 is a flow diagram schematically showing an example of the present invention; Figure 11 is an enlarged illustration of a substantial part of the above described example; Figure 12 is a flow diagram schematically showing a conventional example; Figure 13 is an enlarged illustration of a substantial part of the conventional example; Figure 14 is an enlarged illustration of a substantial part of an example according to the present invention; Figure 15 is a chromatogram obtained by the conventional example; Figure 16 is another chromatogram obtained by the conventional example; Figure 17 is a chromatogram obtained by an example of the present invention; Figure 18 is a chromatogram obtained by another example of the present invention; Figure 19 is a perspective view schematically showing an example of the present invention; Figure 20 is a cross sectional view schematically showing another example of the present invention; Figure 21 is an illustration of an effect of the present invention;

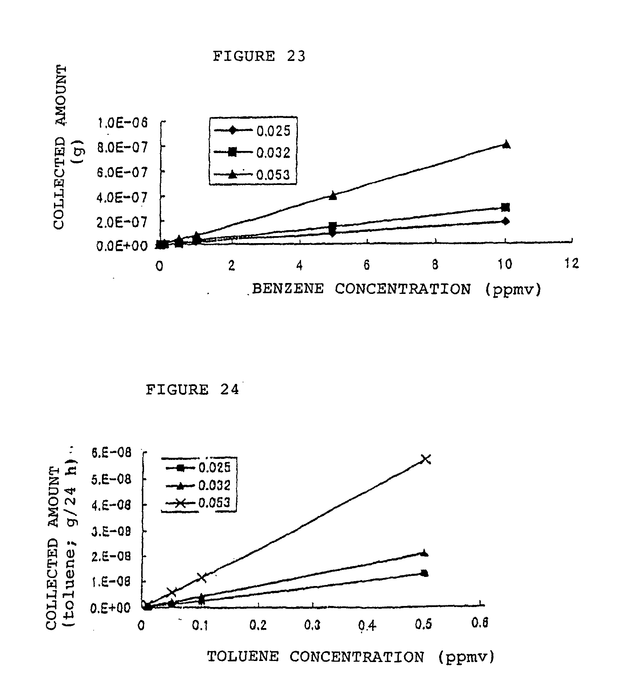

Figure 22 is a perspective view schematically showing another example of the present invention; Figure 23 is a measurement diagram obtained by an example of the present invention; and Figure 24 is a measurement diagram obtained by another example of the present invention.

Best Mode for Carrying out the Invention

According to a basic configuration of the present invention, a column 3 whose solid-phase extraction part is provided with a porous body 2 having open pore structures formed across the entire inner diameter of the column 3 and along an appropriate length of the column 3 is used as a so-called micro trap 1 in order to perform solid-phase extraction of a sample injected from a injection port 4, and the extracted component is concentrated within pores 5, 5, ... of the porous body 2 of the column 3, and then the concentrated component is introduced into an analytical column 7 of analytical means 6 such as gas chromatography means having detection means 61 such as an FID without allowing the component to be diffused. Although various injection port may be used as the injection means 4, a six-way valve can be used by way of example to communicate a sample injection port, throughpores, a carrier injection port, a measuring tube and the like with each other and to shut-off the communication, in order to inject the sample into the column 3.

The column 3 is communicating with the analytical column 7 via a communicating tube 18, and it is recommended that the communicating tube 18 is provided with a carrier gas channel and a vent via a three-way joint or an electromagnetic valve for example in order to discharge the sample, to purge the solvent, and to introduce the component to be analyzed into the analytical system, for example.

With respect to the micro trap 1, a tube 11 which is made of metal or fused silica is used, and a porous body 2 is formed inside the tube 11 along an appropriate length of the tube 11 and across the entire diameter of the tube 11. The tube 11 to be used has the same inner diameter as that of the analytical column 7 such as a capillary column, and particularly has an inner diameter of 0.1 mm to 1.5 mm and a length of 1 mm to 300 mm.

Then, the porous body will be described. The porous body used in the present invention has a pore described below and the pore has an open pore structure communicating from an upper end to a lower end. In addition, it is preferable that an axial section of the pore is circular or almost circular, and although a material of the porous body is not particularly limited as long as a macro pore size can be controlled within a range described below, the material is an inorganic porous body such as porous ceramic or porous glass and for example the porous glass is desirable. Among examples of the porous glass is a glass having an $NaO$-$B_2O_3$-$SiO_2$-$CaO$ based composition, and the porous glass may be manufactured by using a glass to which various oxides such as $Al_2O_3$, $ZrO_2$, $ZnO_2$, $TiO_2$, $SnO_2$ and $MgO_2$ are added (this is described in Japanese Patent Laid-Open No. 7-120350).

The porous glass may be manufactured as follows. For example, silica sand, boric acid, soda ash and alumina are mixed together and fused at 1200 to 1400°C. After the fused mixture is molded at 800 to 1100°C, borosilicate glass whose phase has not been yet divided is obtained, and this glass is subjected to a heat treatment to be divided into a $SiO_2$ phase and a $B_2O_3$-$Na_2O$-$CaO$ phase and then subjected to an acid treatment to manufacture a porous body preserving a $SiO_2$ skeleton therein. A pore size can be controlled by changing the conditions of carrying out the heat treatment based on the intended use and the diameter can be within a range of 0.1 to 10 microns having a uniform distribution of pores.

Among examples of the porous ceramic are silica, alumina silicate A (obtained by sintering hard magnetic particles), silica sand, alumina, alumina seriate B (obtained by sintering chamotte particles), porous mullite, diatomaceous earth and the like. The porous ceramic is manufactured, for example, by mixing ceramic particles whose particles sizes are within a certain range (such as hard magnetic ground products, silica, alumina, and chamotte) and pore forming materials such as crystalline cellulose (Asahi Kasei: Abicell) with an appropriate dispersion solvent and then molding and sintering the obtained mixture. The porous ceramic, whose pore size is within or beyond a range from about 500 μm to about 0.1 μm and whose pore distribution is uniform, can be manufactured depending on its usage.

Other examples include: a synthesized inorganic-organic porous body which is a porous body being inorganic as well as organic, synthesized from organic matters including silicon alkoxides, titanium alkoxides, zirconium alkoxides, or the like and hydrocarbons, aromatics, alcohols, carbon, or the like; and an organic porous body (macroporous polymer) which is a polymer for example composed of a copolymer of a monovinyl monomer selected from a group consisting of acrylates, methacrylates, vinylpyridine, N-vinylpyrrolidone, vinyl acetate, and styrene and a divinyl monomer selected from a group consisting of alkylenediacrylates, alkylenedimethacrylates, hydroxyalkylenediacrylates, hydroxyalkylenedimethacrylates, divinylbenzene, and vinylpyridine.

The above described pore is obtained by modifying an inner surface of a pore by using a coating agent and/or a chemical modifier suitable for a separation sample used for a conventional packing. Among the coating agents are polyethylene glycol and silicone oil for example. And among the chemical modifiers are various kinds of silane finishing agents such as: alkylchlorosilanes including trimethylchlorosilane (TMS), dimethyl-n-octylchlorosilane, and dimethyl-n-octadecylchlorosilane (ODS); aminoalkoxysilanes including r-aminopropyltriethoxysilane; and other epoxysilanes. In addition, high molecular compounds such as proteins or low molecular compounds may be bonded to modified groups of a surface modifier.

When a column is packed with a non-porous packing, pores are provided only between particles, and such structure is referred to as a single pore. When a column is packed with silica gel particles having pores, a pore is provided within a particle and also pores are provided between particles, so that a double structure is formed. This is referred to as a double pore. Although the single pore is formed when a column is packed with a non-porous filler, a shape of the space will vary depending on a state of the particles, so that a separation mode becomes complicated. On the other hand, separation by the double pore does not result in a simple adsorption distribution, so that the separation mode is not simple. Therefore, a single pore in which the shapes of spaces do not vary is recommended. This can also be said in the case of the porous body.

In addition to the above described porous body 2, it is recommended to use a porous body 200 whose structure is made by filling the macropores 5 of the above described porous body 2 with microporous bodies 50 having micropores 51, 51, ... . This porous body will now be described.

Macropores 5, 5, ... of a skeletal body having macropores 5 are impregnated with monomers for forming micro porous bodies 50, and the monomers are polymerized within the macropores 5, 5, ... by the use of a solvent or the like which has already been added to the monomers, then macropores 5 are filled with micro porous bodies 50 which are smaller than the macropores 5 and which have open structures and micropores 51, 51, ... , so that a porous body 200 having an integral structure is produced. In this case, the monomer for forming the micro porous body 50 may be either of organic materials and inorganic materials, and if the monomer is inorganic, a porous silica glass having micropores can be formed as follows. That is, a catalyst such as hydrochloric acid is added to tetraethoxysilane to prepare a sol, and the macropores are impregnated with the sol before aging. On the other hand, if the monomer is organic, various kinds of resins can be selected. For example, a polyacrylamido gel porous body can be obtained by initiating polymerization after the macropores are impregnated with acrylamido monomers. A range of the micropore is determined based on a particle size of a component intended to be separated which is present in a liquid. Even a chemical substance which has a higher-order structure as in the case of proteins presenting in a liquid can be sufficiently incorporated within a pore as long as the size of the chemical substance is up to 1000 nm due to a liquid affinity. Preferably, the size is 100 to 500 nm.

The monolith-type of porous column has become a very rigid structure in terms of an entire skeletal body, by fixing a brittle porous body glass or porous ceramic obtained through the sol-gel process within macropores of a porous body glass or porous ceramic which is a rigid skeletal body. Therefore, a sealing of its periphery can be easily achieved by hermetically placing a ring, such as Teflon (a registered trademark) or polypropylene which has been conventionally used for a filter or the like, around the periphery.

Using the monolithic column, a silica skeletal diameter and a throughpore diameter can be made independently. So that a pre-treatment column which is the most suitable for its usage can be fabricated. For example, the column can be fabricated as follows depending on circumstances: (1) when a liquid sample is subjected to the chromatography, the throughpore is decreased in size to reduce the influence of the diffusion; and (2) when a gas sample is subjected to the chromatography (since its diffusion coefficient is about $10^{-4}$ times that of the liquid sample) , the throughpore is increased in size to reduce the distribution resistance.

In addition, thermal desorption, which is achieved by using a heating device 19 in which a rising rate in temperature becomes faster, is recommended in order to introduce a component of interest collected by the micro trap into the analytical column 7 without diffusing the component. An example thereof will be described in reference to Figure 2.

A tube 11 or a tube 11 cladded with a open tubular 12 is inserted through or retained by heat blocks 13, 13 made of aluminum or the like in order to heat the micro trap 1, and a power supply 15 is connected via electrodes 14, 14 to the heat blocks 13, 13. For controlling the temperature of this tube 11 or open tubular 12, it is possible to provide a well known current controlling device or temperature controlling device for example as desired.

Next, this micro trap will be further described in detail. This micro trap is a open tubular 12 constituted by a conductive heating element, and is formed into a cylindrical body made of stainless steel or other metals. A material whose resistance values will vary depending on temperatures (electric resistance/temperature characteristic) is conveniently used for the open tubular 12. When a temperature of the micro trap is increased from a room temperature, a range of its rising rate in temperature is preferably from 17°C/second to 200°C/second. The open tubular 12 may be fabricated such that a capillary column is cladded with or accommodated in the open tubular 12, but it is also possible that a porous body 2 is provided within the open tubular 12 per se to use as the micro trap. That is, the tube 11 and the open tubular 12 may be fabricated independently, but these tubes may be fabricated integrally.

Other examples will now be described with reference to Figures 6 and 7. Reference numeral 8 denotes an injection valve, where a column 3 is provided between ports 81 and 84 and a port 85 serves as a fill port through which a sample can be injected via a syringe for example communicating with a sample vial 9. A port 86 is communicating with a pump 10. A port 82 is communicating with a diluter 21 and a solvent 22 via a two-way valve 20, and a port 83 is communicating with a gas chromatograph 23.

Then, operations in the above described example will be described. Once the pump 10 is actuated, the column 3 between ports 81 and 84 is sucked through ports 86 and 81, and consequently, a sample is sucked from the sample vial 9 which is communicating with the port 84. According to such operations, a component to be analyzed contained in the sample is retained in pores 5, 5, ... when the component passes through the column 3. On the other hand, the diluter 21 is actuated to measure the solvent from the solvent vial 22. Then the injection valve 8 is switched from one position to another, and consequently the ports 82 and 81 or the ports 84 and 83 are communicating with each other. Therefore, the solvent passes from the diluter 22 through the two-way valve 20 and the column 3 to elute a component to be analyzed retained within the pores 5, 5, ..., then the eluted component is fed into the gas chromatograph 6.

[Example 1]

An example achieved by a device configured according to Figures 1 and 2 will be described.

Device configuration

Injection port-(Rapid heating device+Monolithic column)-GC(FID)
Monolithic column; 20 cm, Inner diameter 0.2 mm, and Outer diameter 0.35 mm
Macro pore diameter 3 $\mu$m, Micro pore Diameter 8 nm
Separation column; TC-1, Inner diameter 0.25 mm, Film thickness 0.1 $\mu$m, 15 m
Injection port temperature 120°C, Column temperature 120°C, Detector temperature 120°C
Carrier gas; He, Carrier pressure 350 kPa

Sample

18 ng of benzene is injected by using a standard gas (nitrogen-based) prepared such that the benzene becomes 505 ppm.

Trap Part Heating Conditions

20°C (3 minutes)-100°C/S-120°C (10 minutes)
Figure 8 is a chromatogram obtained when a sample (benzene) is not trapped provided that the temperature of the trap tube is constantly kept at 120°C.
Figure 9 is a chromatogram showing a desorption state caused by rapid overheating after benzene is trapped by the trap tube (20°C).
As shown in Figures 8 and 9, a sharp peak is recognized in Figure 9 which is at the same sensitivity as that in Figure 8. Therefore, it can be seen that the sample whose band is in a narrow state is reliably trapped by the micro trap and then desorption is performed.
Next, an example in which the present invention is utilized for introducing a sample when performing liquid chromatography will be described in detail with reference to Figure 10.
Reference numeral 8 denotes an injection valve, where a monolithis column 3 is provided between ports 101 and 104 and a port 106 serves as a injection port through which a sample can be injected by a syringe 31 for example. A port 105 is communicating with a drain 32 and a port 102 is communicating with an eluent 34 via a pump 33. A port 103 is communicating with a detector 61 via a column 35. Reference numeral 36 denotes a pump and is communicating with an eluent 37, and is also coupled to the pump 33 and the port 103 via a mixer 38.
In addition, actual embodiments of the present invention can be practiced in various ways. By way of example, a device of the present invention can be configured as shown in Figure 11. When a common HPCL system is used, various effects can be produced only by using a monolithis column at a loop portion 47 shown in Figure 12.
For example, if ODS silica gel having an inner diameter of 0.3 mm×10 mm, 3 $\mu$ is used as a concentration column, a pressure of about 10 Mpa or more is applied thereto when a 10 $\mu$l of sample is intended to be fed into the concentration column within 3 seconds. When a monolithis column having the same size as described above was used, a pressure applied thereto was about 0.2 Mpa.
A pressure at which a sample can be directly introduced into the column manually or by an auto sampler for example is up to about 1 Mpa, so that a high-performance packed column is not used. If the packed column is used at the same pressure as described above, particle size becomes about 30 $\mu$m and a resolution is reduced to one-tenth, so that concentration and separation can not be performed sufficiently. On the other hand, the monolithis column can be used at a low pressure, so that the concentration and introduction can be simply performed by providing the monolithic column at the loop position.
In the packed type of column, a sample diffuses into connection parts 40, 41 as well as a piping 42 and a filter part 43 at a time of introducing the sample into a main column 39 even when the concentration is successfully performed, so that a peak shape becomes worse at a low flow rate as in the case of a micro column. In the monolithis column which has an integral structure and which does not require piping and a filter, an abnormal peak shape due to a space volume will not occur.

If the conventional packed type of column 30 is intended to be provided at the injection part 8, pipings 42, 42 are inevitably required. Packings are not placed within the piping 42 and concentration will not be effected, so that a peak band becomes broader. Even if the packings are placed within the pipe 42, filters 43, 43 are inevitably required in order to hold the packings. A peak bans in this case also becomes broader because concentration will not be effected. Such influences become significant as the flow rate becomes lower (Figure 13).

In the monolithis column 3, which can be formed into a desired shape and can be inserted into an innermost portion of the injector, concentration is effected in any positions of the column and consequently the band will not be broadened. In the above described packed column, even if the concentration is effected by the high-pressure concentration of the pump, it takes about 10 minutes or more when feeding a 1 mL of sample at a pressure of 350 Mpa. A degradable agricultural chemical such as thiuram degraded after a lapse of about 3 minutes in the eluent. In the case of utilizing the monolithis column 3, a sample could be concentrated within 2 minutes when feeding the sample at a pressure of 100 Mpa, so that the sample could be utilized for an analysis of the degradable component. As described above, this is effective for column switching which has been conventionally performed (Figure 14).

In addition to the above described basic examples, the present invention can also be applied to an analysis of a multicomponent agricultural chemical. Such agricultural components are required to be measured by HPLC when performing an environmental analysis. When such analysis is performed, a method as described below is usually used: an aqueous solution sample is cleaned up by a complicated solid-phase extraction; and then a portion of the sample is introduced into the HPLC. This method has a problem, in terms of treatment of the sample, that the material balance in each process will not be unknown. Therefore, an actual sample can be estimated only from comparative experiments where preparations are added.

Introduction by the column switching, in which each process can be continuously carried out and consequently the material balance becomes apparent, provides a method having a high degree of precision. However, the conventional switching method, which requires a concentration pump and a valve for switching to a washing mode for example, provides an expensive HPLC system. If a monolithis column was used for a loop at an injection part, the simple HPLC system could produce the same effect as in the case of the column switching. In addition, using a capillary column as the main analytical column, an amount of the solvent to be used could also be reduced.

[Example 2]

When an injection valve 8 is switched to a load position (a black line) and a 10 µL of sample is injected from a port 106 by a syringe 31, the sample is injected into a monolithis column 3. There is little resistance, so that the sample can be manually injected. A sample component is concentrated at an inlet of the monolithis column 3. An overflowed liquid is discharged from a drain 32 via a port 105. The sample component is concentrated at an inlet of the monolithis column 3 in a narrow band.

Next, when the injection valve 8 is switched to an injection position (a dotted line), the sample is fed from a port 102 to a column 35 in a reverse direction by an eluent 34 from a pump 33 such that the sample passes through as follows: the port 102-a port 101-the monolithis column 3-a port 104-a port 103. In this case, the sample is not diffused by a filter or piping and is introduced into the column 35. A tailing phenomenon as in the case of the conventional method could not be recognized even when the 10 µL of sample was introduced (Figure 17).

According to the method of the present invention, a sample whose amount is several tens of times larger than that in the conventional system can be introduced.

[Example 3]

Using the same configuration as in the case of Example 2, a sample solution obtained by diluting a sample with water was subjected to an analysis. A 50 µL of sample which was five times larger than that in the case of Example 2 was introduced.

The injection valve 8 was switched to the load position (the black line), and the 50 µL of sample diluted by the syringe 31 was measured and then the sample was injected from the port 106. The sample could be injected manually with little resistance. A sample component is concentrated at a monolithis column 6. An overflowed liquid is discharged from the drain 32 via the port 105. The sample component is concentrated at the inlet of the monolithis column 3 in a narrow band. An effect of the concentration is enhanced because of dilution with water, so that the sample is concentrated in a narrow band even if a substantial amount of sample is introduced.

Next, when the injection valve 8 is switched to the injection position (the dotted line), the sample is fed from the port 103 to the column 35 in a reverse direction by an eluent 34 from the pump 33 such that the sample passes through as follows: a port 023-the port 101-the monolithis column 3-the port 104-the port 103. In this case, the sample is not diffused by a filter or piping and is introduced into the column 35. A tailing phenomenon as in the case of the conventional method could not be recognized even when the 50 μL of sample was introduced (Figure 18).

According to the method of the present invention, a sample whose amount is several hundreds of times larger than that in the conventional system can be introduced by dilution.

[Example 4]

Using the same configuration as in the case of Example 3, a sample solution obtained by dissolving a sample in an initial eluent was subjected to an analysis. A sample whose amount was 50 μL was introduced. The injection valve 8 was switched to the load position (the black line), and 50 μL of water was introduced as initial pre-conditioning. Next, a 50 μL of sample was measured and then injected thereinto. The sample could be injected manually with little resistance. The monolithis column 3 is sufficiently substituted with water, so that a component of interest is concentrated even in the case of the sample diluted with the eluent which is not expected to produce the effect of concentration. An overflowed liquid is discharged from the drain 32 via the port 105. The sample component is concentrated at the inlet of the monolithis column 3 in a narrow band. An effect of the pre-conditioning of the monolithis column 3 was the same as that when the sample was diluted with water.

Next, when the injection valve 8 is switched to the injection position (the dotted line), the sample is fed from the port 103 to the column 35 in a reverse direction by an eluent 34 from the pump 33 such that the sample passes through as follows: the port 102-the port 101-the monolithis column 3-the port 104-the port 103. In this case, the sample is not diffused by a filter or piping and is introduced into the column 35. A tailing phenomenon could not be recognized, and a chromatograph which was the same as that in Example 3 was obtained.

[Example 5]

Using the same configuration as in the case of Example 4, a sample solution obtained by dissolving a sample in an initial eluent was subjected to an analysis. A sample whose amount was 50 μL was introduced. The injection valve 8 was switched to the load position (the black line), and 50 μL of water was introduced as initial pre-conditioning. Next, a 50 μL of sample was measured and injected thereinto, and then a 50 μL of 80% ACN solution was also introduced. The sample was able to be injected manually with little resistance. A portion of the components can be washed and removed by allowing the sample to flow through the monolithis column 3 having different elution capacities. Only a component which is not eluted is concentrated, and the other components which are not intended to be analyzed are discharged from the drain 32 via the port 105 along with the overflowed liquid. Analyte is concentrated at the inlet of the monolithis column 3 in a narrow band.

Next, when the injection valve 8 is switched to the injection position (the dotted line) , the sample is fed from the port 103 to the column 35 in a reverse direction by an eluent 34 from the pump 33 such that the sample passes through as follows: the port 102-the port 101-the monolithis column 3-the port 104-the port 103. In this case, the sample is not diffused by a filter or piping and is introduced into the column 35. By washing the monolithis column 3 with 80% acetonitrile at a time of loading, only the components such as 1. Thiuram, 2. MCPP, and 3. Iprdione eluted in early stages were washed, and sharp peaks of analyte such as 4. Pencycuron and 5. Bensulide were obtained.

[Example 6]

An auto sampler was used instead of the manual injector, and a monolithis column was attached instead of the loop. A method of the present invention was applicable to the auto sampler to which the loop could be connected.

An effect of chromatography, which was the same as that in the case of Examples 2 to 5, was produced.

Now, an embodiment where atmospheric substances such as gaseous substances in the atmosphere are collected and concentrated according to the present invention will be described below.

Reference numeral 11 denotes a blank tube made of metal or fused silica, inside which a porous body 2 having open pore structures is packed and formed across the entire diameter of the tube and along an appropriate length of the tube. It is recommended that a space 44 is provided between one end 111 of the blank tube 11 and an upper end 121 of the porous body 2. A blank tube 11, which is similar to an analytical column such as a capillary column, having an inner diameter of 0.1 mm to 1.5 mm and a length of 1 mm to 300 mm is conveniently used. Specifically, a blank tube 11 made of fused silica having an inner diameter of 0.25 mm, 0.32 mm, or 0.53 mm is used, and a porous body 2 having a length of 5 to 15 mm is packed and formed within the tube 11 at a distance of 0 to 10 mm from one end of the tube 11, that is, creating a space 44. At a lower side of this porous body 2, it is also possible to provide a space 45 having an appropriate length such as 10 mm.

Consequently, the spaces 44 and 45, that is diffusion controlling parts, are respectively formed at both ends of the porous body 2 within the tube 11, and sampling can be achieved at both ends simultaneously. According to this configuration, a sampling amount can be easily increased within a certain period of time, and a trace amount of component can also be analyzed. Although it is preferable that the porous body 2 is packed and formed within the tube integrally, an appropriate number of porous bodies 2 each of which has been integrally formed can also be inserted and packed into the blank tube 11. Further, it is recommended that the sampling is carried out by tying up an appropriate number of capillary porous bodies in a bundle. Consequently, samplings at a plurality of points can be performed at single sampling, and handling operations or transferring also become simple.

If the above described porous body and other porous body 46 are packed in a portion or all of the space 44 within the blank tube 11, an atmospheric air flow directed to the blank tube 11 can be further approximated to a laminar flow. Among other porous bodies 47 may be polyethylene, polypropylene, polyethylene terephthalate, urethane foam, silica, titania, zirconia, alumina, and hydroxyapatite, in addition to the above described materials.

Next, a collection process, where a gaseous component in the atmosphere is subjected to passive sampling by the use of a tubular collection tube A having a structure as described above, will be described.

There is no concentration gradient outside the blank tube 11 because of a turbulent flow. However, at a boundary layer between one end 111 of the blank tube 11 and an outside of the blank tube 11, there is a resistance $R_1$ against a flow of a component to be measured directed to the blank tube 11. On the other hand, a turbulent flow is not produced but a laminar flow is produced in the space 44 acting as a diffusion controlling part, so that there is a concentration gradient within the space 44. A resistance created when a flow of molecular diffusion passes through this part is given as $R_2$. In addition, a resistance $R_3$ associated with physiochemical adsorption is created at a boundary portion between the porous body 2 as an adsorbent and the space 44.

If the resistance values are defined as described above, the aforementioned overall mass transfer coefficient is represented as follows: $K_{OG} = 1/(R_1+R_2+R_3)$. A formula $R_3 = 0$ is given, provided that a component to be measured which has been reached in the vicinity of the adsorbent is entirely absorbed. Therefore, the collection tube may be designed such that a value of $R_2$ becomes sufficiently larger than variations in $R_1$, in order to minimize variations in $K_{OG}$ caused by a wind velocity.

[Example 7]

In this case, 10 ppm of benzene was sampled from the atmosphere for 8 hours by the use of a collection tube whose blank tube diameter was 0.032 cm and diffusion length was 1 cm. The conditions such as 8 hours and 10 ppm are adhered to indoor environmental guideline values of benzene authorized by the U. S. Occupational Safety & Health Administration.

A diffusion coefficient of benzene at 1 atm. and 25°C is 0.09 cm$^2$/S, so that the following equation is provided.

$M = D \times (A/L) \times (Ca-Cs) \times t = 0.09 \times (\pi \times 0.016^2/1) \times (10 \times 10^{-6} \times 10^{-3} \times 3.49) \times (8 \times 3600) = 0.29$ μg.

An amount of benzene trapped by the use of the collection method and device according to the present invention is 0.29 μg. This amount is within a range of sensitivity of a flame ionization detector (FID) generally detected by the gas chromatography, so that a quantitative analysis can be sufficiently performed. A relation between a concentration of benzene and a collection amount is shown in a graph of Figure 23 and in Table 2.

(Table 2)

| Concentration of Benzene in Atmosphere (ppmv) | Sampler Collection Amount (g, 8h) | | |
|---|---|---|---|
| | 0.025 | 0.032 | 0.053 |
| 0.01 | 1.8E-10 | 2.9E-10 | 8.0E-10 |
| 0.05 | 8.9E-10 | 1.5E-09 | 4.0E-09 |
| 0.1 | 1.8E-09 | 2.9E-09 | 8.0E-09 |
| 0.5 | 8.9E-09 | 1.5E-08 | 4.0E-08 |
| 1 | 1.8E-08 | 2.9E-08 | 8.0E-08 |
| 5 | 8.9E-08 | 1.5E-07 | 4.0E-07 |
| 10 | 1.8E-07 | 2.9E-07 | 8.0E-07 |

[Example 8]

Sample: 0.07 ppm of toluene in the atmosphere (an indoor environmental guideline value) was sampled by a collection tube described below.

Collection tube: Diffusion phase: a silica porous body having a monolith structure where a throughpore size is 50 μm.

Collector: a silica porous body having a monolith structure where a throughpore size is 50 μm and a mesopore size is 100 nm, subjected to an ODS treatment.

Overall mass transfer coefficient: $K_{OG}$ = 0.0308 (cm/s)

Collection time: 24 hours

The entire mass transfer coefficient $K_{OG}$ of the collection tube is 0.0308 (cm/s), so that the following equation is provided.

$$M = D \times (A/L) \times (Ca - Cs) \times t = 0.0308 \times (\pi \times 0.016^2/1)$$

$$x \, (0.07 \times 10^{-6} \times 10^{-3} \times 3.49) \times (24 \times 3600) = 0.53 \, \mu g.$$

An amount of benzene trapped by the use of the collection method and device according to the present invention is 0.53 μg. This amount is within a range of sensitivity of a flame ionization detector (FID) generally detected by the gas chromatography, so that a quantitative analysis can be sufficiently performed. A relation between an outside concentration of toluene and a collection amount is shown in a graph 24 and in Table 3.

(Table 3)

| Concentration of Toluene (ppm) | Tube Diameter | | |
|---|---|---|---|
| | 0.025 | 0.032 | 0.053 |
| 0.001 | 2.51E-11 | 4.11383E-11 | 1.128E-10 |
| 0.005 | 1.26E-10 | 2.05691E-10 | 5.642E-10 |
| 0.01 | 2.51E-10 | 4.11383E-10 | 1.128E-09 |
| 0.05 | 1.26E-09 | 2.87968E-09 | 5.642E-09 |
| 0.1 | 2.51E-09 | 4.11383E-09 | 1.128E-08 |

[Example 9]

Benzene in a working environment at an organic synthesis laboratory in a plant was measured.

Collection tube: This collection tube was configured by tying 7 tubes in a bundle. Each of the 7 tubes was provided, at its inlet side, with a space portion having a length of 1 cm from an end of the tube as a diffusion controlling part having a diameter of 0.032 cm. Further, a silica porous body having a monolith structure where a throughpore size was 50 μm and a mesopore size was 100 μm was subjected to an ODS treatment to form a collector having a length of 2 cm ahead of the space portion, and then both ends of the tube was sealed.

 a. Break the seals of the collection tube, and start the sampling.
 b. Seal the collection tube after 8 hours.
 c. Attach the collection tube to a thermal desorption part which is coupled to a gas chromatograph.
 d. Perform a quantitative analysis under the following conditions.
  Device configuration: Injection port-(Rapid heating device + Collection blank tube)-GC (FID)
  Separation column: TC. 1 Inner diameter 0.25 mm, Membrane pressure 0.1 μm, 15 m
  Injection port temperature: 120°C Column temperature: 120°C, Detector temperature: 120°C
  Carrier gas; He, Carrier pressure 150 kPa
  Rapid thermal part temperature program: 20°C (3 minutes)-100°C/s-120°C (10 minutes)
 e. Results from the analysis performed by the GC-FID is summarized in Table 4.

(Table 4)

| Lot No. | 1 | 2 | 3 | 4 | 5 | 6 | 7 | Average Value | CV Value (%) |
|---|---|---|---|---|---|---|---|---|---|
| Concentration of Benzene (GC Analytical Value, μg) | 2.85 | 2.92 | 2.68 | 3.05 | 3.11 | 2.72 | 2.98 | – | – |
| Atmospheric Benzene Concentration (ppb; Average Value for 8 hours) | 59.1 | 60.5 | 55.5 | 63.2 | 64.5 | 56.4 | 61.8 | 60.1 | 5.6% |

According to the above described Table 4, a measurement value was 60.1 (ppb/8 hours average: N=7) and a CV value was 5.6%.

As described above, when a component intended to be analyzed is removed by a solvent, a capillary tube which is narrower than the conventional passive sampler is used. Therefore, an amount of the solvent to be used becomes less than before, and a possibility of environmental pollution is reduced. Also, it is possible to extremely easily perform the thermal desorption in a short operation time.

Industrial Applicability

According to the present invention, a column comprising a porous body having open pore structures is used as a pre-treatment column for extracting a sample, so that a sample load increases and a distribution resistance is reduced relative to that obtained by a column packed with particulate substances, and further a time required for reaching a distribution equilibrium of a component of interest can be reduced compared with that obtained by the SPME fiber or In-tube method. In addition, it is possible to provide extremely effective advantages for a pre-treatment before the chromatography such that the sample having a narrow band can be introduced into an analytical column.

According to the present invention, the distribution resistance is further reduced, a flow rate does not change, and the flow rate per unit of time is increased, so that the present invention is effective in reducing a time required for conducting the pre-treatment before the analysis.

According to the present invention, a mesopore is further formed within a throughpore so that a robust structure can be formed, therefore, the present invention has an advantage that the pre-treatment can be conducted with the material load increased and with the distribution resistance decreased.

According to the present invention, a column having a porous body is provided as a micro trap, the micro trap having a large surface area and also having small-diameter throughpores through which a fluid passes, so that a high adsorption efficiency can be obtained and analyte can be retained in a narrow band width without requiring large-sized cooling means such as a cryofocus. Analyte can be retained in the narrow band width, so that analyte can be removed by the rapid heating while keeping analyte in the narrow band width and can be introduced into an analytical column. Analyte introduced in the narrow band width can be analyzed by the chromatography at a high sensitivity and at a high resolution.

According to the present invention, it is characterized in that, before introducing a sample into a separation column of liquid chromatography, the sample is retained and concentrated within an integral solid-phase extraction column (Monolithic Column) having multiple continuous pores or being a porous body communicating with a sample introducing valve and then introduced into the separation column after obtaining a narrow sample band. Therefore, it is possible to achieve a method for introducing a sample, in which a large amount of sample can be introduced and the sample having a narrow band can be eluted at a time of elution thereof and the eluted sample can be introduced into the separation column, and it also becomes possible to concentrate the sample at a high speed, so that the material can be introduced without any alterations thereof even when the sample is concentrated. In addition, a range of the optimum linear velocity is wide, and there is no need to accurately control the flow rate and to put some thought into designing the device, so that this device can be simplified and it is also possible to provide sufficient performance even when the device is coupled to the sample introducing valve. Further, this performance is not so degraded even when the sample flows through the column at a high speed, so that it is possible to reduce a residence time which may contribute to the alteration of sample, and also the present invention becomes effective in reducing the analysis time.

According to the present invention, an integral solid-phase extraction column having multiple continuous pores or being a porous body communicating with a sample introducing valve is communicating with a channel through which a sample is introduced into a separation column of liquid chromatography. Therefore, a pressure is reduced by a factor of several tens or less compared with a pressure obtained by a packed column type, so that a high-pressure pump is not required for introducing the sample, and consequently it can be easily incorporated into a sample fill part. That is, the sample can be concentrated and introduced only by making alterations to a manual injector or to a loop portion of the conventional auto sampler. After introducing the sample, it is also possible to easily clean up by allowing liquids having different solvent strengths to flow through the column. In addition, controlling the temperature is effective means when performing the HPLC analysis, because the separation performance can be improved and the separation characteristic can be changed. In the conventional method, the above described means could not be used for concentrating the sample. Performance of a concentration packed column comprising a column tube and packings can not be improved, because it is impossible to change a temperature within the column due to its heat conduction. In the present invention where an integrally structured column is used, the heat conduction is preferable and the temperatures can be controlled.

According to the present invention, the solid-phase extraction column is directly connected to the injection part, so that it becomes possible to directly connect the column to the injection valve. In addition, the present invention does not require a filter because the column has an integral structure, and consequently, the column is unsusceptible to the sample diffusion. Therefore, the present invention can be applied to a capillary or a micro column having a small inner diameter which has been difficult to use in the conventional methods. Further, there is no need to seal the whole of the inside of the tube, so that a pinpoint diffusion plate which does not affect the diffusion capacity can be utilized.

According to the present invention, the device can be inexpensively manufactured so as to have an extremely simple structure as the so-called passive sampler which does not use a power source such as a motor, a multiplicity of the columns are simultaneously used to increase the number of measurements, the sample can be collected without variation, and resistance at the adsorbent is reduced because an air blowing pressure loss is low and a surface area is large as a collector, so that the present invention provides a method and device for ideally adsorbing the sample.

In addition to the above described advantages, the present invention brings about an effect of controlling the diffusion based on the molecular diffusion of substances intended to be measured when a sample reaches an adsorbent through a space within a tube part. Therefore, it is possible to suppress variations in the entire mass transfer coefficient $K_{OG}$ during the course where the substances intended to be measured passes through the space portion of the tube and is trapped by a porous body (corresponding to an adsorption rate during a period of time in which the substances of interest move from an atmosphere outside a column to a surface of the adsorbent within the column to be collected), the variations being caused by a change in a measurement environment. And further, errors due to the measurement environmental factors such as a change in wind velocities at a time of the measurement can also be reduced.

According to the present invention, the overall mass transfer coefficient which is provided as an advantage of the above described claim 2 is further stabilized, so that it is useful to further stabilize the measurement values. In addition, according to claim 4, the sample which has been collected extremely inexpensively and efficiently can be introduced into an analytical instrument efficiently as described above, so that it becomes possible to analyze the substances in the atmosphere extremely efficiently.

**Claims**

1. A method for collecting and concentrating a sample, **characterized in that** a column configured such that the inside of a narrow tube is provided with a porous body having open pore structures across the entire diameter of the tube and along an appropriate length of the tube is used, a sample containing a substance to be measured is allowed to pass through the column to retain the substance to be measured within pores of the porous body in the column, and the substance to be measured is concentrated so as to narrow a sample band.

2. A method for collecting and concentrating a sample, **characterized in that**, as a pre-treatment for a chromatographic analysis, a column configured such that the inside of a narrow tube is provided with a porous body having open pore structures across the entire diameter of the tube and along an appropriate length of the tube is used as a micro trap, a sample containing a substance to be measured is allowed to pass through the column to retain the substance to be measured within pores of the porous body in the column, and the substance to be measured is concentrated and then removed from the porous body so as to be introduced into analytical means.

3. The method for collecting and concentrating a sample according to claim 1 or 2, **characterized in that** the porous body is a single pore body.

4. The method for collecting and concentrating a sample according to claim 1 or 2, **characterized in that** the porous body which is formed by filling a macropore with micropores is used.

5. A device for collecting and concentrating a sample, **characterized in that** a column configured such that the inside of a narrow tube is provided with a porous body having open pore structures across the entire diameter of the tube and along an appropriate length of the tube is used as a micro trap, the column being equipped with a rapid heating device and communicating with sample injection means at one end thereof and with analytical means at the other end thereof.

6. A method for introducing a sample for use in liquid chromatography, **characterized in that**, before introducing the sample into a separation column of the liquid chromatography, the sample is retained and concentrated within an integral solid-phase extraction column (Monolithic Column) having multiple continuous pores or being a porous body and communicating with a sample introducing valve so as to form a narrow sample band, and then the sample is introduced into the separation column.

7. A device for introducing a sample for use in liquid chromatography, **characterized in that** a channel for introducing the sample into a separation column of the liquid chromatography communicates with an integral solid-phase extraction column having multiple continuous pores or being a porous body and communicating with a sample introducing valve.

8. The device for introducing a sample for use in liquid chromatography according to claim 7, **characterized in that** the solid-phase extraction column is directly connected to the injection part.

9. A simple method for collecting atmospheric substances such as gaseous substances in an atmosphere within a tube, the method for collecting the atmospheric substances being **characterized in that** a collection tube configured such that a porous body having open pore structures composed of inorganic, organic, or hybrid polymers is formed within a blank tube is used.

10. A simple device for collecting atmospheric substances, **characterized in that**, a porous body having open pore structures composed of inorganic, organic, or hybrid polymers is formed within a certain portion of a blank tube as a collection tube, the certain portion being spaced apart by an appropriate distance from an end of the blank tube.

11. The simple device for collecting atmospheric substances according to claim 10, **characterized in that** a porous body having open pore structures composed of substances which do not adsorb components to be measured is provided in a space between the above described end of the blank tube and the above described certain portion.

12. An analytical method, **characterized in that** gaseous components are collected by using a simple method for collecting atmospheric substances according to claim 9, and then the collected components are introduced into an analytical instrument such as a chromatograph via appropriate extraction means such as solvent extraction means or thermal extraction means.

FIGURE 1

FIGURE 2

FIGURE 3

FIGURE 4

FIGURE 5

FIGURE 6

FIGURE 7

FIGURE 8

Time (min)

FIGURE 9

Time (min)

FIGURE 10

ELUENT A

ELUENT B

SAMPLE

DRAIN

FIGURE 11

FIGURE 12

FIGURE 13

FIGURE 14

FIGURE 15

FIGURE 16

FIGURE 17

FIGURE 18

FIGURE 19

FIGURE 20

FIGURE 21

FIGURE 22

FIGURE 23

FIGURE 24

## INTERNATIONAL SEARCH REPORT

| | International application No. |
|---|---|
| | PCT/JP01/08300 |

A. CLASSIFICATION OF SUBJECT MATTER
    Int.Cl$^7$  G01N30/48

According to International Patent Classification (IPC) or to both national classification and IPC

B. FIELDS SEARCHED

Minimum documentation searched (classification system followed by classification symbols)
    Int.Cl$^7$  G01N30/48

Documentation searched other than minimum documentation to the extent that such documents are included in the fields searched
    Jitsuyo Shinan Koho        1922-1996    Toroku Jitsuyo Shinan Koho  1994-2001
    Kokai Jitsuyo Shinan Koho  1971-2001    Jitsuyo Shinan Toroku Koho  1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 7-120450 A (Kabushiki Kaisha Sumika Bunseki Center), 12 May, 1995 (12.05.95), | 1-3,5-12 |
| Y | (Family: none) | 4 |
| Y | JP 6-134206 A (Mitsubishi Kasei Corporation), 17 May, 1994 (17.05.94), (Family: none) | 4 |
| A | JP 2000-241314 A (Nippon Telegr. & Teleph. Corp. <NTT>), 08 September, 2000 (08.09.00), (Family: none) | 1-12 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 December, 2001 (18.12.01) | 15 January, 2002 (15.01.02) |

| Name and mailing address of the ISA/ | Authorized officer |
|---|---|
| Japanese Patent Office | |
| Facsimile No. | Telephone No. |

Form PCT/ISA/210 (second sheet) (July 1992)